# EUROPEAN PATENT APPLICATION

(11) **EP 4 670 877 A1**
(43) Date of publication of application: **31.12.2025**
(21) Application number: 24185196.3
(22) Date of filing: 28.06.2024
(51) Int. Cl.: B23B 27/14

(54) **A CUTTING INSERT FOR TURNING AND A TURNING TOOL**

(71) Applicant: AB Sandvik Coromant, 811 81 Sandviken (SE)
(72) Inventor: Wikblad, Krister, Sandviken (SE); Löf, Ronnie, Sandviken (SE); Wickström, David, Sandviken (SE)
(74) Representative: Sandvik

(57) **Abstract**

The invention relates to a cutting insert (1) for a turning tool, the cutting insert comprising:
- a first surface (2) and a second surface (3), wherein the first and second surfaces are arranged opposite each other and facing opposite directions; and
- a peripheral surface (4) connecting the first surface (2) and the second surface (3).

An intersection between the first surface and the peripheral surface forms an edge that includes four side edges (5) and four corner edges (6) arranged alternately such that the corner edges (6) are located pairwise opposite each other, and wherein, in a plan view of the first surface, each corner edge is formed by one or more curvilinear segments. Each corner edge of a first pair (61) of the corner edges has a first length of extension (L1), and each corner edge of a second pair (62) of the corner edges has a second length of extension (L2), wherein the first length of extension (L1) is at least two times greater than the second length of extension (L2).

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece.

A cutting insert, for example made of cemented carbide or some other wear resistant material, is commonly arranged at the front of a turning tool. Cutting inserts often include multiple cutting edges, such that the cutting insert is indexable, i.e., such that different cutting edges can be positioned in active or inactive positions depending on how the cutting insert is mounted in the insert seat.

Many different shapes of indexable turning inserts are known and used for different applications. Common types of turning inserts are square cutting inserts (sometimes referred to as type S inserts, having a nose angle of 90°) and round cutting inserts (sometimes referred to as type R inserts). These inserts, and in particular round inserts, have a high strength and can take heavy cuts.

However, round inserts are limited with respect to what machining operations they can be used for, and they are not very versatile. For many applications where such cutting insert is not possible to use, a weaker cutting insert that may easily break is used instead.

Hence, there is a need for improved cutting inserts for turning that are versatile and strong.

### SUMMARY

It is an object of the present invention to mitigate the shortcomings of the prior art and to provide a cutting insert that is versatile and strong. Another object is to provide a cutting insert that can be used in a safe manner also in operations where the cutting depth may vary during the cut. Another object is to provide a turning insert that is easy to securely mount in an insert seat of a turning tool. Another object is to provide a turning tool that is versatile with respect to different kinds of machining operations and/or feed directions, i.e., not favoring any specific cutting direction.

Thus, according to a first aspect, the invention relates to a cutting insert for a turning tool, the cutting insert comprising:
- a first surface and a second surface, wherein the first and second surfaces are arranged opposite each other and facing opposite directions; and
- a peripheral surface connecting the first surface and the second surface.

An intersection between the first surface and the peripheral surface forms an edge that includes four side edges and four corner edges arranged alternately such that the corner edges are located pairwise opposite each other. In a plan view of the first surface each corner edge is formed by one or more curvilinear segments. Each corner edge of a first pair of the corner edges has a first length of extension, and each corner edge of a second pair of the corner edges has a second length of extension. The first length of extension is at least two times greater than the second length of extension.

Since the first length of extension is greater than the second length of extension, the corner edges of the first pair will be less sharp than the corner edges of the second pair. Thereby, if using one of the corner edges of the second pair as front corner edge for a longitudinal turning operation, the cutting insert will be very robust and insensitive to sudden changes of the cutting depth due to the non-sharp profile of the adjacent corner edges of the first pair.

A front corner edge, as used herein, should be understood as the corner edge that, when the cutting insert is arranged in a turning tool body, is located most forward, in front of the other corner edges, in relation to the extension of the turning tool body. Thus, the front corner edge corresponds to the main cutting edge (surface generating cutting edge) in a longitudinal turning operation.

Accordingly, if using a corner edge of the second pair as main cutting edge in a longitudinal turning operation, it would be possible to maintain the feed also when approaching a shoulder since the adjacent non-sharp corner of the first pair - if running into excessive workpiece material - is less likely to be damaged. This is partly because a non-sharp corner is stronger than a sharp corner, but also since such smooth corner will result in a thinner chip being cut, and the chip thickness will vary smoothly along the corner edge. Thereby, the generated forces and temperature increase will be less concentrated.

It is also possible to use the cutting insert in a longitudinal turning operation but applied with a different orientation with respect to the workpiece, such that one of the corner edges of the first pair is front corner edge and used as main cutting edge in a longitudinal turning operation. Such orientation may be beneficial for some applications, for example when machining rough surfaces for which a large radiused nose cutting edge may be beneficial.

In either of the orientations discussed above, the cutting insert may be used for longitudinal turning in any of two opposite feed directions, in particular if the cutting insert is arranged symmetrically with respect to the turning tool body, i.e., in a position not favoring any particular cutting direction. With the cutting insert arranged in such way, and with one of the corner edges of the second pair arranged as front cutting edge, the cutting insert may also be used for a facing operation, i.e., wherein the feed direction is perpendicular to the rotation axis of the workpiece being machined, using any of the corner edges of the first pair as main cutting edge. Hence, with the cutting insert arranged in such way, the insert may be used for longitudinal turning in two opposite feed directions and also for facing, wherein facing is possible using the corner edge on either side of the front corner edge, for example in order to machine in a pocket or on two opposite faces of a machined component.

In general, regardless how the insert is arranged with respect to the component being machined, the cutting insert is particularly well suited for operations where varying cutting depths can be expected.

Hence, the cutting insert as disclosed herein is very versatile and robust and insensitive to varying cutting depths during machining.

Moreover, the cutting insert is well adapted for being securely mounted in an insert seat of a turning tool body because of the angle formed between the two side edges connected by the corner edge that is opposite to the front corner edge (irrespective of whether a corner edge of the first pair or of the second pair is used as front corner edge), which enables a neutral position of the cutting insert in the tool body, not favoring a specific cutting direction.

The first surface of the cutting insert includes a rake face, and the peripheral surface includes a clearance face, wherein a cutting edge is formed at the intersection therebetween.

The whole edge formed by the intersection between the first surface and the peripheral surface may correspond to the cutting edge. In other words, all parts of the edge may be configured to act as a cutting edge. Hence, the rake face and the clearance face may extend on the first surface and the peripheral surface, respectively, all along the edge. Which parts of the edge that will correspond to an active cutting edge, i.e., the cutting edge that is currently arranged for cutting, depends on how the cutting insert is mounted in the insert seat of the turning tool and on what kind of cutting operation that is performed. The active cutting edge includes at least a part of the corner edge currently used as main cutting edge. The active cutting edge may also include at least a part of one of the side edges connected to such corner edge.

The cutting insert may be indexable, e.g., such that the cutting insert can be mounted in the insert seat in at least two different orientations, for example with any of the corner edges of the second pair arranged as a front cutting edge or any of the corner edges of the first pair arranged as a front corner edge, depending on what kind of tool body the cutting insert is mounted in. The cutting insert may be single sided or double sided. In the latter case, a cutting edge will be formed also at the intersection between a rake face on the second surface and a clearance face on the peripheral surface. Such cutting edge may correspond completely to the cutting edge formed at the intersection between the rake face on the first surface and the clearance face on the peripheral surface. In effect, such double sided cutting insert may be indexed twice as many times as a corresponding single sided cutting insert.

According to some embodiments, the cutting insert may be a positive insert, wherein the peripheral surface forms an angle to the first surface less than 90°, i.e., the peripheral surface slopes away from the first surface to the second surface to provide additional clearance when cutting. Such positive cutting insert is usually single sided.

The cutting insert may include a central hole, extending centrally through the cutting insert, along a central axis of the cutting insert extending from the first surface to the second surface. In other words, a central axis of the cutting insert may extend centrally along the extension of such hole. The hole may be used when mounting the cutting insert within an insert seat of a turning tool body by using a fasting element, such as a screw.

The cutting insert may be made from a wear resistant material, such as cemented carbide. The cutting insert may be non-coated or coated with thin layer of a different material.

The length of extension of each corner edge of the first pair is greater than the length of extension of each corner edge of the second pair, and, consequently, the combined length of extension of the corner edges of the first pair is greater than the combined length of extension of the corner edges of the second pair. Both corner edges of the first pair may have mutually corresponding lengths of extension, and both corner edges of the second pair may have mutually corresponding lengths of extension. Moreover, all the side edges may have mutually corresponding lengths of extension.

The edge formed by the intersection between the first surface and the peripheral surface may be located in a plane that is perpendicular to a central axis of the cutting insert, or, in other words, located in a plane that is parallel to a plane in which the first surface generally extends. Hence, when seen in a side view of the cutting insert, i.e., a view towards the peripheral surface of the cutting insert along a direction perpendicular to the central axis of the cutting insert, the edge may be straight and extend perpendicularly to the central axis. However, for some embodiments it is also envisaged that the edge, in such side view, may be curvilinear and/or extend in a different direction with respect to the central axis. As used herein, any references to the characteristics and extension of the side edges and corner edges are made with respect to a plan view of the first surface of the cutting insert, i.e., as seen from a direction along the central axis towards the first surface.

Each corner edge is formed by one or more curvilinear segments. For example, each corner edge may be formed by one or more circular segments having certain radii of curvature. One or more of the curvilinear segments may also be differently curved, for example corresponding to an elliptical segment. A corner edge may be formed by a single circular segment having a constant radius of curvature, or by a single elliptical segment. Alternatively, a corner edge may be formed by multiple such segments having different curvatures, but the corner edges are not wave-shaped or have an otherwise periodically changing configuration. In other words, each corner edge may be strictly convex in a plan view of the first surface.

The side edges may be straight, i.e., rectilinear, or substantially rectilinear.

The transition between a corner edge and a connected side edge is preferably smooth. In other words, each of the side edges may extend, in relation to a curvilinear corner edge connected therewith, along a tangent to the corner edge at the point where the corner edge transitions into the side edge.

The first length of extension (the length of extension of a corner edge of the first pair) is at least two times greater than the second length of extension (the length of extension of a corner edge of the second pair). For example, the first length of extension may be at least three times greater than the second length of extension, and for example in a range of 3-8 times greater.

According to some embodiments, the first length of extension is at most 20 times greater than the second length of extension.

A too great length of extension of the corner edges of the first pair may result in side edges that are very short, which might not be desirable for many applications. A first length of extension that is less than 20 times the second length of extension may ensure that each of the side edges has a sufficient length of extension.

According to some embodiments, the first length of extension is at least 10% of the total length of extension of the edge when seen in a plan view of the first surface. Hence, the corner edges of the first pair constitute a significant part of the total extension of the edge. As a consequence, each corner edge of the first pair can have a rounded off or blunt shape and form a smooth transition between the two side edges connected by the corner edge.

The first length of extension may for example be within a range of 10-30% of the total length of extension of the edge. For example, the first length of extension may be within a range of 15-25% of the total length of extension of the edge, such as about 20% of the total length of extension of the edge.

The internal angle between any two of the side edges connected by one of the corner edges may be within a range of 60°-120°. For example, such internal may be within a range of 70°-110°, such as within a range of 80°-100°. According to some embodiments, such internal angle is 90°, or substantially 90°, for all the corner edges. Hence, in a plan view of the first surface, and if ignoring the different design of the corner edges, the cutting insert according to such embodiment would have the basic shape of a square. If instead the internal angle between two of the side edges connected by one of the corner edges of the first pair is above 90°, and, as a consequence, the internal angle between two of the side edges connected by one of the corner edges of the second pair is below 90°, or vice versa, the cutting insert would have a rhombic basic shape in a plan view of the first surface.

According to some embodiments, the one or more curvilinear segments of each corner edge of the first pair of corner edges is a single circular segment having a first radius of curvature. Such first radius of curvature may correspond to at least 6 % of the total length of extension of the edge when seen in a plan view of the first surface. Thereby, each corner edge of the first pair may form a very smooth (rounded off) transition between the two side edges connected by the corner edge. An alternative way to express the dimension of the first radius of curvature is in relation to a minimum radial distance from a central axis of the cutting insert to the edge. According to some embodiments, the first radius of curvature may be at least 40% of the minimum radial distance from the central axis of the cutting insert to the edge.

According to some embodiments, also the one or more curvilinear segments of each corner edge of the second pair of corner edges is a single circular segment having a second radius of curvature. The first radius of curvature may be greater than the second radius of curvature, for example at least two times greater, such that each corner edge of the second pair forms a relatively sharper (abrupt) transition between the two side edges connected by the corner edge. For example, the second radius of curvature may be selected such that a corner edge of the second pair is sufficiently strong while also well adapted for generating a high-quality surface in a longitudinal turning operation and facilitating a design wherein the adjacent side edges have a sufficient length of extension. A second radius of curvature that is relatively small may also provide good accessibility with respect to regions of a workpiece that may otherwise be difficult to reach.

In some embodiments, the one or more curvilinear segments of each corner edge of the second pair of corner edges includes a wiper segment. As is well-known in the art, a wiper edge, or a wiper segment of a cutting edge, is formed by one or more large radiused curvilinear segments following a nose cutting edge and that "wipes" the surface behind such nose cutting edge, resulting in a better surface finish by smoothing out the scallops in the machined surface. As used herein, such wiper segment is considered as a part of the corner edge.

Even if a corner edge of the second pair thus may include multiple curvilinear segments, such as circular segments of different radii of which some segments, in particular a wiper segment, even may have a greater radius of curvature than the corner edges of the first pair, the length of extension of each corner edge of the second pair (i.e., the combined lengths of all such curvilinear segments) will still be smaller than the length of extension of each of the corner edges of the first pair. For each corner edge that comprises multiple curvilinear segments of different curvature, the curvilinear segments that connect to respective side edges on either side of the corner edge may have a smaller radius of curvature than at least some of, and for example all of, the other intermediary curvilinear segments of the corner edge.

According to another aspect, the invention relates to a turning tool comprising a cutting insert according to any of the embodiments described herein. The turning tool comprises a tool body having a front end and an opposite rear end and a main extension along a longitudinal axis extending from the front end to the rear end. An insert seat is formed in the front end, and the turning insert is mountable in the insert seat with one of its corner edges arranged as a front corner edge located in front of the other corner edges. According to some embodiments, the insert seat is arranged such that, when the cutting insert is mounted in the insert seat, a bisector of the front corner edge is parallel, or substantially parallel, to the longitudinal axis of the tool body when seen in a plan view of the first surface of the cutting insert.

The front corner edge corresponds to the corner edge currently arranged as main cutting edge for longitudinal turning. With an arrangement wherein the bisector of the front corner edge is parallel to the longitudinal axis of the tool body, the turning tool is equally suitable for longitudinal turning in any of two opposite directions, and the arrangement does not favor any particular feed direction.

However, according to other embodiments, the insert seat may be arranged differently in the turning tool body such that the bisector of the front corner edge is transverse to the longitudinal axis. Thereby, it may be possible to achieve other entering angles of the cutting edge with respect to the workpiece surface that may be better suited for certain applications. However, for such embodiments the turning tool would be adapted for longitudinal turning only in one particular feed direction, and facing may be possible only with one of the corner edges.

### BRIEF DESCRIPTION OF DRAWINGS

The solution will now be described in more detail by means of exemplary embodiments and with reference to the accompanying drawings, in which:
Fig. 1 is a perspective view of a cutting insert according to an embodiment.
Fig. 2 is a plan view of the first surface of the cutting insert in Fig. 1.
Fig. 3 is a side view of the cutting insert as seen from the direction III indicated in Fig. 2.
Fig. 4 is a side view of the cutting insert as seen from the direction IV indicated in Fig. 2.
Fig. 5 shows a turning tool including a tool body and a cutting insert according to Figs. 1-4
Fig. 6 illustrates the turning tool engaged in a longitudinal turning operation along a first feed direction.
Fig. 7 illustrates the turning tool engaged in a longitudinal turning operation along a second feed direction.
Fig. 8 illustrates the turning tool engaged in a facing operation along a third feed direction, using one of the corner edges of a first pair of corner edges.
Fig. 9 is similar to Fig. 8 and illustrates the turning tool engaged in a facing operation along the third feed direction, but using the other one of the corner edges of the first pair of corner edges.
Fig. 10 illustrates an alternative orientation of the cutting insert when engaged in a longitudinal turning operation.
Fig. 11 illustrates an alternative orientation of the cutting insert when engaged in a facing operation.
Fig. 12 is similar to Fig. 5 but illustrates an alternative orientation of the cutting insert with respect to a turning tool body.
Fig. 13 illustrates the turning tool according to Fig. 12 when engaged in a longitudinal turning operation along a first feed direction.
Fig. 14 illustrates the turning tool according to Fig. 12 when engaged in a longitudinal turning operation along a second feed direction.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

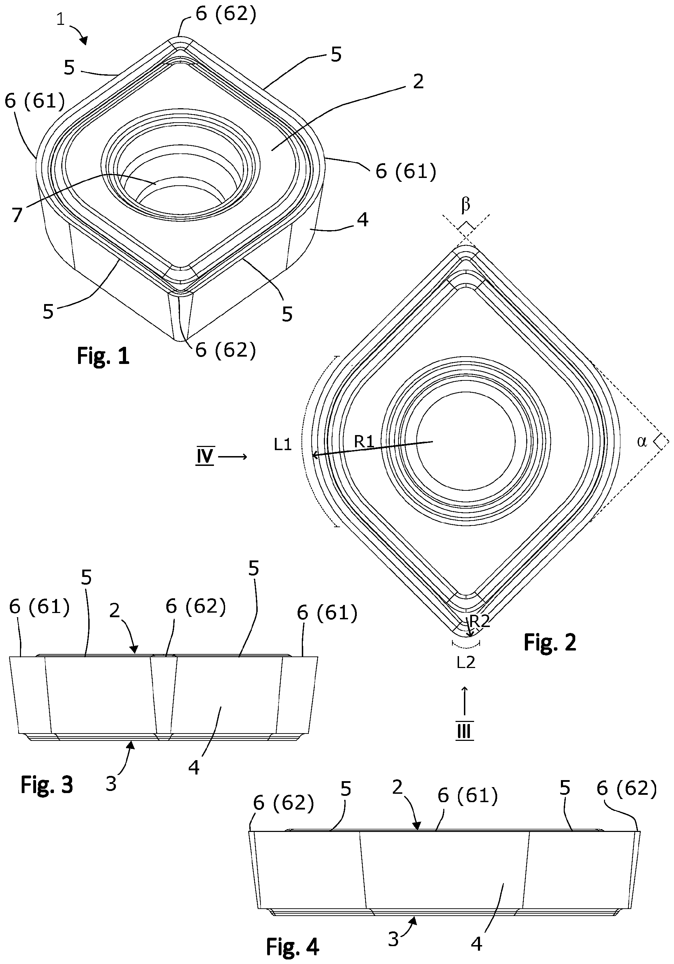

Figs. 1-4 illustrates a cutting insert 1 comprising a first surface 2 and a second surface 3, wherein the first and second surfaces 2,3 are arranged opposite each other and facing opposite directions. A peripheral surface 4 connects the first surface 2 and the second surface 3. An edge is formed by an intersection between the first surface 2 and the peripheral surface 4. The edge includes four side edges 5 connected via four corner edges 6 arranged pairwise opposite each other. Hence, the corner edges 6 includes a first pair 61 of corner edges and a second pair 62. When seen in a plan view of the first surface 2, as shown in Fig. 2, each corner edge is formed by a curvilinear segment, in this case a single circular segment, wherein the circular segment of each of the corner edges of the first pair 61 has a first radius of curvature R1 that in the illustrated embodiment is about six times greater than a second radius of curvature R2 of the circular segment of each of the corner edges of the second pair 62. The side edges 5 are rectilinear. Each corner edge of the first pair 61 of the corner edges has a first length of extension L1 that in the illustrated embodiment is about six times greater than a second length of extension L2 of each of the corner edges of the second pair of corner edges. In this case the first length of extension L1 corresponds to nearly 20% of the total length of the edge.

Two side edges 5 connected by a corner edge of the first pair 61 forms an internal angle α with respect to each other, whereas two side edges 5 connected by a corner edge of the second pair 62 forms an internal angle β with respect to each other. In the illustrated embodiment, the angle α is equal to the angle β, i.e., they are both 90°.

A hole 7 extends through the cutting insert 1 and is used for mounting the cutting insert in an insert seat of a turning tool body, for example using a screw.

As best seen in Figs. 3 and 4, the cutting insert 1 is of the positive type. Hence, the cutting insert is single sided, with no cutting edges on the intersection between the second surface 3 and the peripheral surface 4.

The cutting insert 1 is indexable and can be placed in an insert seat of a turning tool body in two different positions as will be described in more detail below.

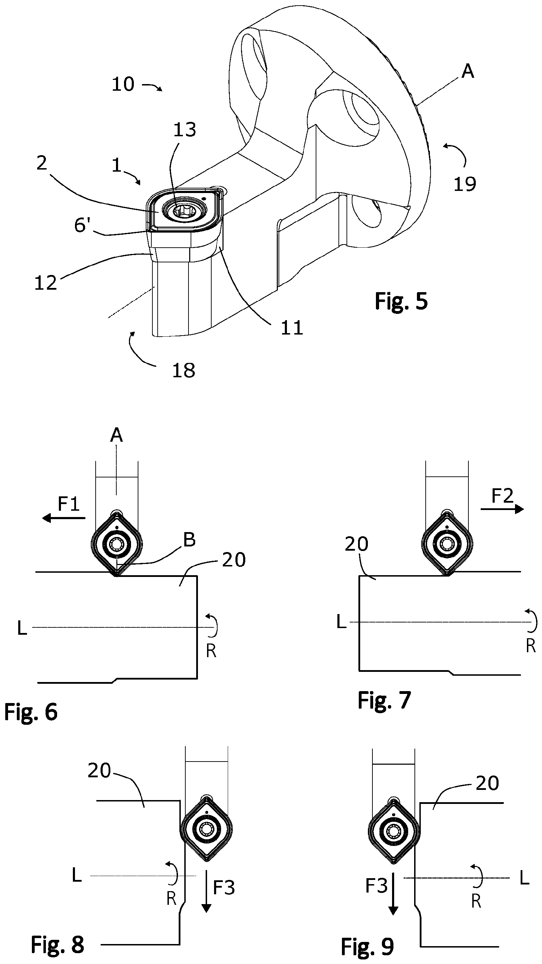

Figs. 5-9 illustrate a turning tool comprising a turning tool body 10 and the cutting insert 1 shown in Figs. 1-4. The turning tool body 10 has a front end 18 and an opposite rear end 19 and a main extension along a longitudinal axis A extending from the front end 18 to the rear end 19. An insert seat 11 is formed in the front end 18. In this case, the insert seat includes a shim 12 on which the second surface 3 of the cutting insert 1 rests. The cutting insert 1 is fixed within the insert seat 11 using a screw 13 extending through the hole 7 in the cutting insert 1 and into a threaded hole (not shown) in the insert seat 11. When the cutting insert 1 is mounted in the insert seat 11, one of the corner edges of the second pair 62 is arranged as a front corner edge 6' that is located in front of the other corner edges. The cutting insert 1 is indexable and may thus be relocated within the insert seat by being rotated 180° and then fixed again using the screw 13, such that the other corner edge of the second pair 62 is arranged as front corner edge.

The insert seat 11 is arranged in the tool body 10 such that a bisector B (illustrated in Fig. 6) of the front corner edge 6' is parallel to the longitudinal axis A of the tool body, when seen in a plan view of the first surface 2 of the cutting insert 1. As a consequence, no particular feed direction is favored. Fig. 6 illustrates how the turning tool can be used for longitudinal turning in a feed direction F1 of a workpiece 20 that rotates around an axis L in a rotation direction R. Due to the symmetric arrangement of the cutting insert 1 in the tool body 10, the turning tool is equally suitable for machining in an opposite feed direction F2, as illustrated in Fig. 7. Moreover, with the cutting insert 1 arranged in this way, the turning tool may also be used for facing operations in a feed direction F3, towards the workpiece axis L, as illustrated in Figs. 8-9.

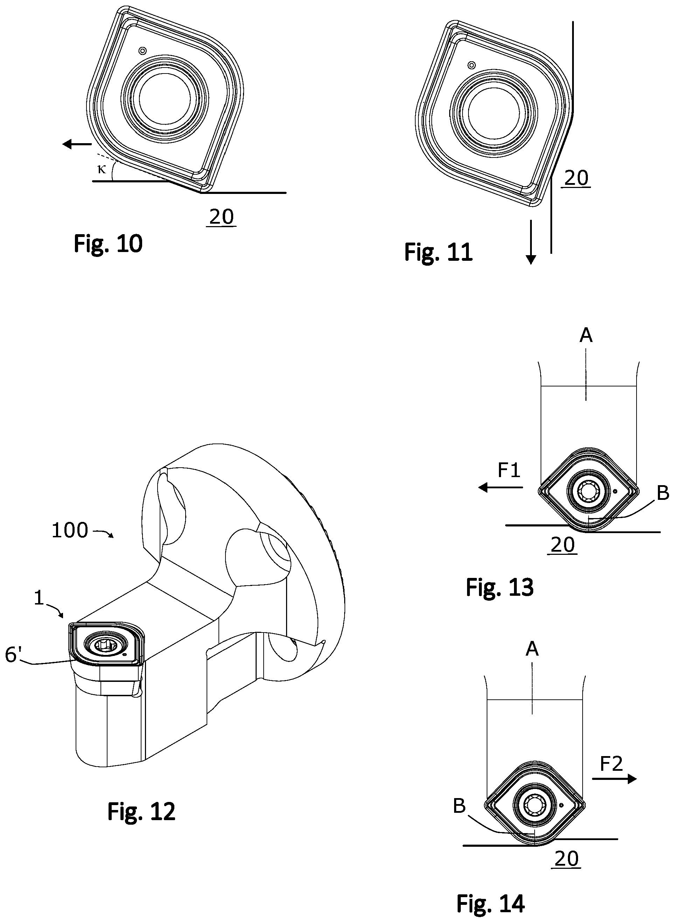

According to other embodiments, the cutting insert 1 is not arranged symmetrically with respect to the tool body but the insert seat 11 is instead arranged such that the bisector B of the front corner edge 6' of the cutting insert 1 extends in a transverse direction, i.e., non-parallel, to the longitudinal axis A of the tool body 10. Such orientation is illustrated in Figs. 10-11 (although the tool body is not shown in the figures). Fig. 10 schematically illustrates a longitudinal turning operation, and Fig. 11 a facing operation, of a workpiece 20. Such arrangement of the cutting insert 1 may be beneficial for certain applications, for example where specific entering angles are desired (e.g., the angle κ shown in Fig. 10). However, in such embodiment, the turning tool will be specifically adapted for certain cutting directions, indicated by arrows in Figs. 10-11.

Figs. 12-13 illustrate another embodiment of a turning tool comprising the cutting insert 1 mounted in a turning tool body 100. The insert seat of the tool body 100 is configured such that one of the corner edges of the first pair 61 is arranged as front corner edge 6' when the cutting insert is mounted in the insert seat, and wherein a bisector B of the front corner edge 6' is parallel to the longitudinal axis A of the tool body when seen in a plan view of the first surface 2 of the cutting insert 1. The cutting insert 1 is indexable and may thus be relocated within the insert seat by being rotated 180°, such that the other corner edge of the first pair 61 is arranged as front corner edge.

As for the embodiment shown in Figs. 5-9, the turning tool shown in Fig. 12 is equally well suited to be used in any of two opposite feed directions F1, F2 in a longitudinal turning operation, as illustrated in Figs. 13-14.

## Claims

1. A cutting insert (1) for a turning tool, the cutting insert comprising:
- a first surface (2) and a second surface (3), wherein the first and second surfaces are arranged opposite each other and facing opposite directions; and
- a peripheral surface (4) connecting the first surface (2) and the second surface (3),
wherein an intersection between the first surface and the peripheral surface forms an edge that includes four side edges (5) and four corner edges (6) arranged alternately such that the corner edges (6) are located pairwise opposite each other, and wherein, in a plan view of the first surface, each corner edge is formed by one or more curvilinear segments, wherein each corner edge of a first pair (61) of the corner edges has a first length of extension (L1), and each corner edge of a second pair (62) of the corner edges has a second length of extension (L2) **characterized in that** the first length of extension (L1) is at least two times greater than the second length of extension (L2).

2. The cutting insert according to claim 1, wherein the first length of extension (L1) is at most 20 times greater than the second length of extension (L2).

3. The cutting insert according to any of the previous claims, wherein the first length of extension (L1) is at least 10% of the total length of extension of the edge when seen in a plan view of the first surface.

4. The cutting insert according to any of the previous claims, wherein the internal angle (α, β) between any two of the side edges connected by one of the corner edges is within a range of 60°-120°.

5. The cutting insert according to any of the previous claims, wherein the one or more curvilinear segments of each corner edge of the first pair (61) of corner edges is a single circular segment having a first radius of curvature (R1).

6. The cutting insert according to claim 5, wherein the first radius of curvature (R1) corresponds to at least 6 % of the total length of extension of the edge when seen in a plan view of the first surface.

7. The cutting insert according to any of the previous claims, wherein the one or more curvilinear segments of each corner edge of the second pair (62) of corner edges is a single circular segment having a second radius of curvature (R2).

8. The cutting insert according to claim 7 when dependent on any of claims 5 or 6, wherein the first radius of curvature is greater than the second radius of curvature.

9. The cutting insert according to claim 8, wherein the first radius of curvature is at least two times greater than the second radius of curvature.

10. The cutting insert according to any of the claims 1-6, wherein the one or more curvilinear segments of each corner edge of the second pair (62) of corner edges includes a wiper segment.

11. A turning tool comprising a cutting insert (1) according to any of the previous claims, wherein the turning tool comprises a tool body (10) having a front end (18) and an opposite rear end (19) and a main extension along a longitudinal axis (A) extending from the front end (18) to the rear end (19), wherein an insert seat (11) is formed in the front end (18), and wherein the cutting insert (1) is mounted in the insert seat (11) with one of the corner edges (6) arranged as a front corner edge (6') located in front of the other corner edges.

12. A turning tool according to claim 11, wherein the insert seat (11) is arranged such that, when the cutting insert (1) is mounted in the insert seat (11), a bisector (B) of the front corner edge (6') is parallel, or substantially parallel, to the longitudinal axis (A) when seen in a plan view of the first surface (2) of the cutting insert (1).
